# EUROPEAN PATENT APPLICATION

(11) **EP 1 544 459 A1**
(43) Date of publication of application: **22.06.2005**
(21) Application number: 02751655.8
(22) Date of filing: 24.07.2002
(51) Int. Cl.: F03D 9/00, F03D 3/06, E04H 12/08

(54) **WIND POWER GENERATOR AND METHOD FOR CONSTURCTING WIND POWER GENERATOR**

(71) Applicant: Sunpower Co., Ltd., Fukuroi-shi, Shizuoka 437-0064 (JP)
(72) Inventor: KINPARA, Shiro, Toyodacho, Iwata-gun, Shizuoka 437-1100 (JP); UCHIYAMA, Hisakazu, c/o Cosmo Plant Co., LTD., Fukuroi-shi, Shizuoka 437-0064 (JP)
(74) Representative: Bailey, David Martin
(86) International application number: PCT/JP2002/007465
(87) International publication number: WO 2004/009993

(57) **Abstract**

A wind power generator 10 comprising a frame 11, an impeller 12 supported rotatably by the frame, power generators 34 driven to rotate by the impeller, and a controller 40 for selecting some ones from among transmission wires 36, 37 led from the power generators 34 by connect/disconnect them. The impeller 12 is supported by a vertically extending shaft 22, to which a main gear 31 is connected. The frame 11 has rotatable sub gears 32meshed with the main gear 31, and the shafts 34 of the sub gears 32 are connected to the power generators 34. The controller 40 has a rotation sensor 41 for sensing the wind velocity or the rotational speed of the impeller, and disconnects the transmission wires 36,37 when the rotational speed decreases, thereby reducing the number of power generators 34 being operating.

## Description

### Field of the Invention

This invention relates to a wind power generator and method for constructing the wind power generator, and more particularly to a wind power generator producing electricity from the generator of which input shaft is connected to a support shaft of an impeller rotates by winds.

### Backeround Arts

In the Japanese Patent Publication No.H3-10037, a wind power generator is disclosed, wherein the shaft of an impeller is connected to a ring gear; the sun gear located in the same shaft as that of the impeller is rotated via the plural planet gears meshing internally with the ring gear; the shaft of the sun gear is connected to the generator. These ring gear, planet gears, and the sun gear compose an epicycle reduction gear, and the rotation of the impeller connected to the ring gear is speed-upped by the epicycle reduction gear and transmitted to the generator. Thus the generator operates efficiently in the condition of low impeller rotation in a weak wind.

Because winds used by the wind power generator are dependent upon the natural phenomenon, they vary widely from a weak wind to a strong wind. Therefore, the wind power generator is required to respond quickly to the variation. In conventional wind power generators, in order to respond to such a wide range variation of winds, generators capable of responding to the wide range variation of winds are employed. However, generators capable of responding to the wide range variation of winds from a weak wind to a strong wind have not been yet in practical use. In the wind power generator of the above Japanese Patent Publication No.H3-10037, it is intended to get efficient speed-up action by inputting the wind power into the ring gear which is an output of the epicycle reduction gear, and by outputting from the sun gear. But this composition may cause too high rotation of the reduction gear. This invention is directed to provide a wind power generator which can respond to the wide variation of winds from a weak wind to a strong wind. Further, this invention provides efficient method for constructing structures such as wind power generators.

### Disclosure of invention

The wind power generator of this invention comprises a flame, an impeller supported rotatably by the flame, plural generators driven to rotate by the impeller, transmission wires leading from generators, and a controller selecting some transmission wires to connect or disconnect them.

The power generator can be located on whichever of the frame side or the impeller side. In the former configuration, the power generator comprises a discoid or annular main gear which rotates with the rotation of the impeller, and plural sub gears meshing with the main gear, wherein each shaft of the sub gear is connected to the generator fixed on the frame. In this case, it is preferable that the impeller rotates around a vertically extending axis and the main gear is fixed on the impeller.

In the configuration in which the generator is fixed on the impeller side, the impeller rotates around a vertically extending axis; an annular run way or a main gear adjacent to the impeller is fixed to the frame; plural wheels or sub gears rolling along the annular run way or the main gear are attached rotatably to the impeller; and the generators are connected to a shaft of the wheels or sub gears.

In the configuration in which the power generator is fixed on the frame side, an annular rail is fixed to the impeller; wheels contacting with the annular rail is attached rotatably to the frame; and the wheels are connected to a shaft of the generators. In this case, the wheels may support the weight of the impeller. Further, in whichever of the above case, the main gear is composed of a chain mounted on an annular member and the sub gear is composed of a sprocket meshing with the chain.

The above controller preferably has a means to detect a wind speed or a rotation speed and a means to decrease the number of the generators which disconnect the transmission wires when the rotational speed decreases.

The above impeller may rotate around a vertically extending axis; the impeller may be composed of longitudinal blades located circumferentially at predetermined interval; and each longitudinal blade may have a pocket in its back to receive winds.

The second aspect of the power generator of this invention comprises a flame, an impeller supported rotatably by the flame, and generators driven to rotate by the rotation of the impeller, wherein the impeller rotates around a vertically extending axis; the impeller is composed of longitudinal blades located circumferentially at predetermined interval; and the longitudinal blades have a pocket in their backsides to receive winds.

The process for constructing a power generator etc. of this invention comprises the steps of, fixing of a first stage members on a basement; fixing a climbing crane, which climbs by itself, composed of legs and the construction scaffold surrounding the legs on the first stage members; lifting the climbing crane using the first stage member as a support; connecting the second stage member to the first stage member using the crane; and lifting the climbing crane using the second stage member as a support.

In this method of the construction, the climbing crane comprises a first fixing bracket which can fasten or unfasten the each stage member, a retractable lifting unit connected on the first fixing bracket, and a second fixing bracket which can fasten or unfasten the each stage member; and wherein the climbing crane is lifted by extending the retractable lifting unit in the condition that the first fixing bracket is fastened and the second fixing bracket is unfastened; and retracting the retractable lifting unit in the condition that the second fixing unit is fastened and the first fixing bracket is unfastened.

The power generator of this invention is so composed that one unit of the impeller drives plural generators. When the impeller rotates by the wind, all generators are driven. When the wind power is strong, the rotation of the impeller increases to generate a large torque, all of the transmission lines of the generators are connected to generate large powers. When the wind power is weak, transmitting wires of some power generators are disconnected. Thereby, the rotation resistances cause by the generators become very low due to the disconnection of the transmitting wires and high power generating efficiency of the remaining power generator is maintained.

This operation of connecting /disconnecting the transmission lines of the generators needs fewer components compared with the case in which the torque transmission to the generator is controlled by on/off of a crutch, and has a merit of high mechanical efficiency. Particularly in the case that so many as 4 to 12 sets of generators are used, fine response to the variation of wind can be obtained facilitating easy connecting/disconnecting operation of the transmission line with a simplified composition and control of the relay box etc.

In the wind power generator comprising a discoid or annular main gear which rotates with the rotation of the impeller, and plural sub gears meshing with the main gear, and each shaft of the sub gear is connected to the generator, the rotation of the impeller rotates the main gear and its rotation is transmitted to the plural sub gears. The rotation of the sub gears drives the each generator. This configuration simplifies the combined location of the large main gear and the small sub gears, thereby providing a merit of suitable balance of the generator location.

The power generator provided with the impeller being rotated around a vertically extending axis and the main gear being attached to the impeller can be well applied to a windmill in which longitudinal blades rotating around a vertical shaft are provided. Further, since the main gear rotates in the horizontal plane, in the case of a large main gear, it can be rotated stably, and because the deflection of the shaft is small, it can be easily supported.

In the wind power generator in which the impeller rotates around a vertically extending axis; an annular run way or a main gear adjacent to the impeller is fixed to the frame; plural wheels or sub gears rolling along the annular run way or the main gear are attached rotatably to the impeller; and the generators are connected to a shaft of the wheels or sub gears, the wheels or sub gears rotate along the run way or the main gear to drive the power generator when the impeller rotates. This configuration enables to locate the generators along a larger circumference, thereby enabling many generators to be located at a suitable interval.

In the case that the annular rail is fixed to the impeller; wheels contacting with the annular rail are attached rotatably to the frame; and the wheels are connected to a shaft of the generators, the wheels act in the same way as the sub gears. In the case that the weight of the impeller is support by the wheels and transmitted to the runway, the wheels are supported by the runway. Therefore, the weight of the impeller is transmitted dispersedly to the runway depending on the number of the wheels. Thereby it enables to support stably even a large impeller is used.

In the case that the annular main gear is composed of a chain attached to the annular member and the sub gear is composed of a sprocket meshing with the chain, it is easy to compose even with the equivalent of a large diameters main gear, and it has a merit of non-slip compared with the wheels etc.

In the case that the controller has a means to detect a wind speed or a rotational speed and a means to decrease the number of the generators which disconnect the transmission wires when the rotational speed decreases, the number of the generators generating the power is automatically adjusted responding to the variation of wind power, thereby the operation being easy. In other words, connecting/disconnecting one by one the transmission wires of the many generators manually measuring the wind power requires much labor, but the controller achieves automation of the work enabling finally an unattended operation at a remote place.

In the configuration that the impeller rotates around a vertically extending axis; the impeller is composed of longitudinal blades located circumferentially at predetermined interval; and each longitudinal blade has a pocket in its back to receive winds, the pocket receives the wind enabling full reception of very weak winds.

In the second aspect of the power generator of this invention, since the pockets of the longitudinal blades receive the wind, weak winds can be fully received.

In the process for the construction of this invention, comprises the steps of; fixing of a first stage members on a basement; fixing a climbing crane, which climbs by itself, composed of legs and the construction scaffold surrounding the legs on the first stage members; lifting the climbing crane using the first stage member as a support; connecting the second stage member to the first stage member using the crane; and lifting the climbing crane using the second stage member as a support. This process can save the labor to lift up the crane to the upper edge of the first stage members using another crane or to erect the crane on the upper edge of the first stage. Since the crane is equipped with a construction scaffold surrounding the first stage members, it stands stably. Further, the construction scaffold allows easy erection work of the second stage members and the interlinks for the frame.

Further, since the crane is self-lifted using the second stage member as supports, one pair of the crane to lift the other crane alternatively is not necessary. In other words, only by one crane, the structure can be efficiently constructed.

The above climbing crane comprises a first fixing bracket which can fasten or unfasten the each stage member, a retractable lifting unit connected on the first fixing bracket, and a second fixing bracket which can fasten or unfasten the each stage member; and
wherein the climbing crane is lifted by extending the retractable lifting unit in the condition that the first fixing bracket is fastened and the second fixing bracket is unfastened; and retracting the retractable lifting unit in the condition that the second fixing unit is fastened and the first fixing bracket is unfastened. The crane is lifted up like a spanworm depending on the extension and retraction of the retractable climbing unit. It is lifted down also like a spanworm as above. In the case that the inside structure is assembled after the external wall is assembled, which is the outside of the structure, the inside structure can be sequentially assembled while the crane is being descended. After the assembling of the outside structure, the crane is descended to the lower part to assemble the lower inside structure, and the upper inside structure can be sequentially assembled while the crane is being ascended.

### Brief Description of Drawings

Figure 1 is a rough cross sectional plane view of an embodiment of the wind power generator of this invention.

Figure 2 is a perspective view showing the whole of the wind power generator.

Figure 3 is a cross section along III -III line.

Figure 4a and Figure 4b are each graphs showing the operation of the controller of this invention.

Figure 5 and Figure 6 are side cross sections showing the other embodiments of this invention.

Figure 7a is a substantial perspective view of additional other embodiment of the wind power generator of this invention, and Figure 7b is a cross section along VII―VII line of Figure 7a.

Figure 8 is a cross sectional plane view of the impeller provided with the longitudinal blade of Figure 7a.

Figure 9 is a substantial perspective view of additional the other embodiment of the wind power generator of this invention.

Figure 10 is a substantial plane view of additional the other embodiment of the wind power generator of this invention.

Figure 11 a substantial plane view of the impeller of the other embodiment of this invention.

Figure 12 is a process drawing of the embodiment of the construction method of this invention.

Figure 13 is a cross section along X iii ―X iii line of Figure 12

Figure 14 is a partial process drawing showing a substantial part of the construction method.

### Best mode for carrying out the invention

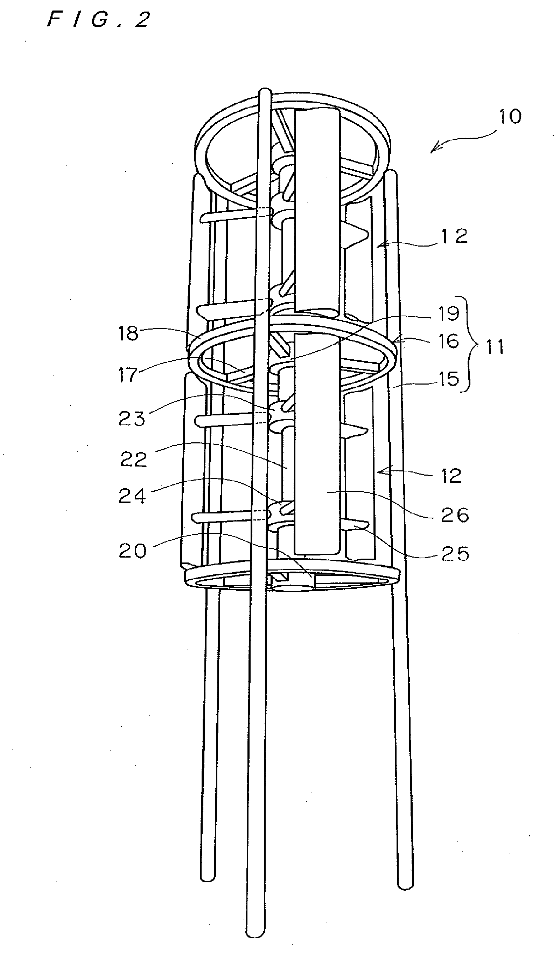

At first, the whole of the power generator is described referring to Fig.2. The power generator 10 shown in Fig. 2 comprises the frame 11, the two stages impeller 12 provided above and below in the frame. The each impeller 12 is rotatably supported by a vertically extending axis to the frame 11.

The frame 11 comprises three legs 15 extending upward and downward and interlinks 16 connecting the legs at a circumferentially equal interval. Interlinks 16 are located at three positions; the upper edge of the legs 15, a little upper position than the lower edge of the legs, and the middle position. In the spaces between the each interlink 16, the impellers 12 is accommodated. Interlinks 16 comprise three spokes 17 extending in radial directions and the ring 18 connecting the each adjacent outside edge of these spokes 17. Further, in the center of the spoke 17 of the each interlink 16, one pair of the upper and lower bearings 19, 20 to hold the impeller is provided rotatably. In the vicinity of the lower bearing 20, the power generator room 21 is provided.

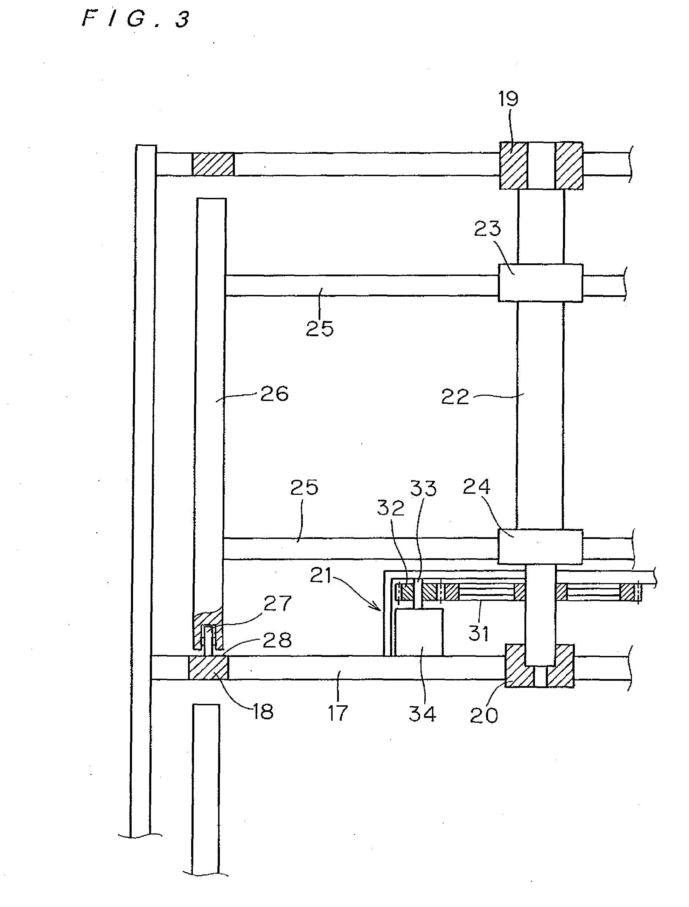

As shown in Fig.2 and Fig.3, the impeller 12 comprises the shaft 22 extending upward and downward, one pair of the upper and lower bosses 23, 24 fixed to the shaft, three transversal blade 25 extending in the radial directions from the each boss, and the longitudinal blades 26 fixed to the front edges of the upper and lower transversal blades 25. More specifically, in this embodiment, three longitudinal blades 26 and doubled six transversal blades 25 are provided. The transversal blades 25 have such a wing shape that a lift force acts upward when the shaft 22 rotates anticlockwise viewed from the top. The front edge can be inclined upward as for the direction of the rotation, and a specific wing shape and a specific inclination can be combined. Further, the inclination can be adjusted.

The longitudinal blades 26 have a wing shape that yields anticlockwise moment viewed from top when the resultant force is yielded by the three longitudinal blades 26 in lateral winds. The longitudinal blades 26 can be inclined around the vertical shaft, and their wing shapes can be combined with the inclination. Further, the inclination can be adjusted.

As shown in Fig. 3, the upper and the lower edges of the shafts 22 of the each impeller 12 are supported by the upper bearing 19 and the lower bearing 20 rotatably. The shaft 22 between the upper and the lower bosses 23, 24 can be omitted to save the weight. In the case that the wind power generator is installed as shown in Fig. 2, the weight of the impeller 12 is supported by the lower bearing 20. In the embodiment shown in Fig.3, the wheel 27 is rotatably provided under the each longitudinal blade 26, and the ring 18 of the frame 11 acts as an annular run way. Thus the weight of the longitudinal blades 26 and the transversal blades 25 is supported by the frame 11 via wheels 27, thereby the load of the bearings 19, 20 being reduced and also the deflection of the transversal blades 25 being reduced.

Further in this embodiment, the power generator room 21 is provided between the lower boss 24 of the impeller 12 and the lower bearing 20 supporting the shaft 22. In this part, the main gear 31 is fixed around the shaft 22. In the power generator room 21, the plural sub gears 32 meshing respectively with the main gear 31 are provided. Each sub gear 32 is fixed to the shaft 33 which is rotatably supported in the power generator room 21, and the shaft 33 is connected to the input shaft of the power generator 34. Additionally, the input shaft of the power generator 34 can be used as the shaft 33 of the sub gear 32.

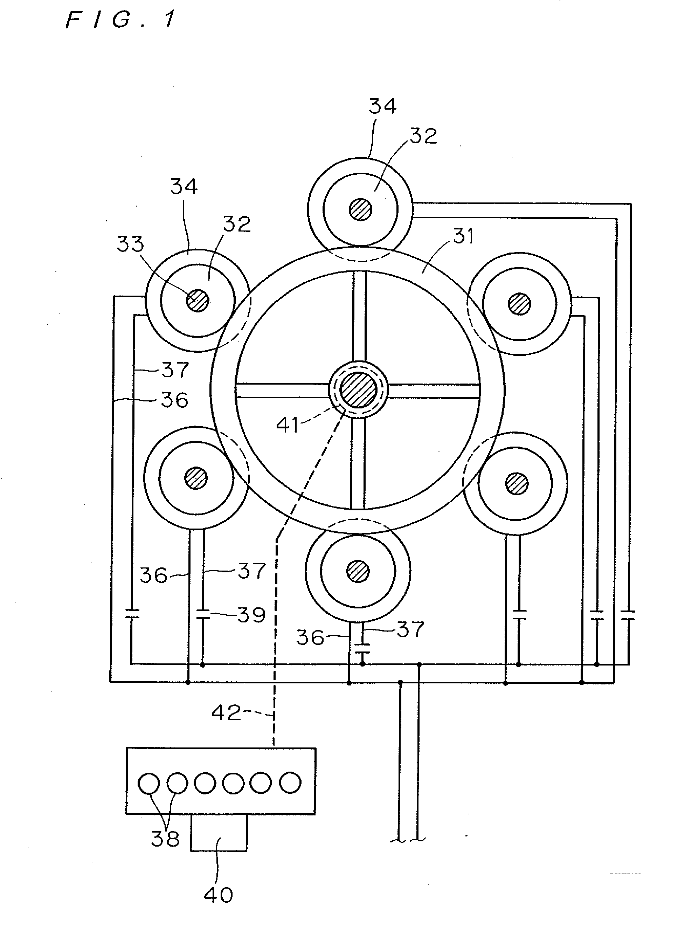

As shown in Fig.1, the sub gears 32 are located at almost equal intervals around the main gear 31. The number of teeth of the each sub gear 32 is fewer than that of the main gear 31. Therefore, the rotation of the sub gear 31 is transmitted to the power generator 34 with an increased rotational speed. In this embodiment, the number of the sub gear is six, but the number can be 2~5, or more than 7. One of the transmission wires 36, 37 that transmits the generated powers from the each power generator 34 is interposed by a breaker point 39 of the breaker 38. Each breaker 38 is on/off controlled by the controller 40. The shaft 22 is provided with the rotation sensor 41 to detect the number of rotation, and the detected signal from the sensor 41 is transmitted to the controller 40 through the signal wire 42. Two transmission wires 36, 37 can be both interposed by the breaker point of the breaker.

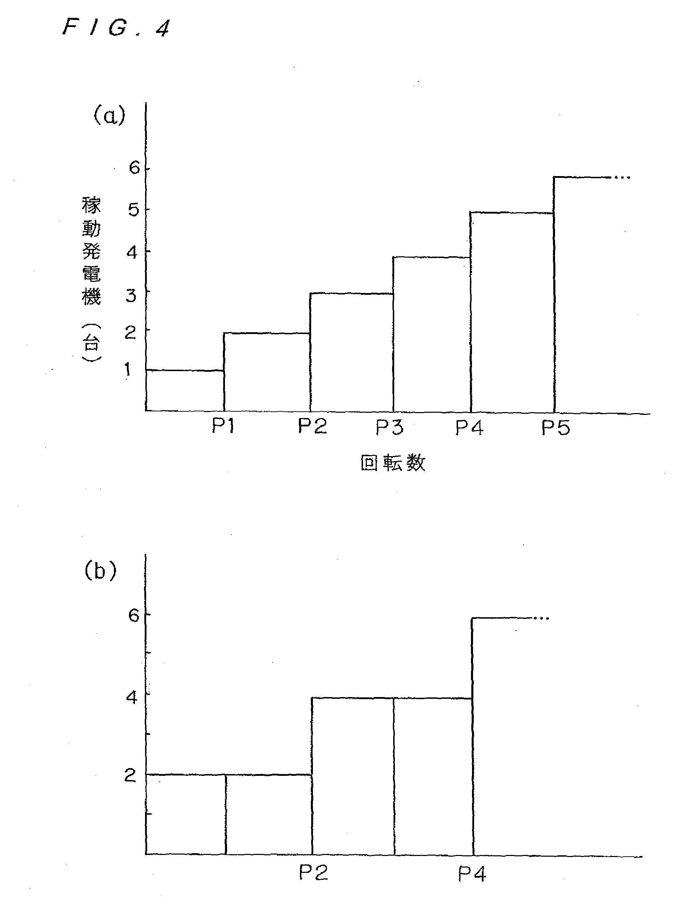

As shown in Fig. 4a, when the number of rotation of the shaft 22 is more than the given number P5, the controller 40 turns on the breakers 38 of the all power generators. When the number of rotation is less than the given number P5, it turns off some of the breakers 38 of the power generators 34 according to the number of rotation. For example in Fig.4, when the number of rotation is P4~P5, one of the breaker of the power generators 34 is turned off, and the other 5 power generators are turned on. When the number of rotation is P3~P4, two breakers are turned off and the other four power generators 34 are turned on. Thus the controller 40 adjusts the number of the operating power generators, one by one, in six stages according to the number of rotation of the shaft 22 detected by the rotation sensor 41.

When the transmission wire 35 of one power generator 34 is turned off, the generator 34 will not generate power and reduces the rotational resistance in almost a kind of idling condition. Therefore, when the number of rotation of the shaft 22 decreases because of the decrease of wind power, the resistance brought in by the power generation is decreased increasing the number of rotation of the shaft 22. Thus, variation of the number of rotation of the power generators can be lowered to get an efficient power generation. When the operation of 2 to 5 power generators are stopped, only one remaining power generator generates power. In this case a certain level of high rotation number is obtained in a weak wind because of the low rotation resistance enabling efficient power generation. In alternative current generation, the low variation in the number of rotation provides a merit of low frequency variation

The number of the operating power generators can be adjusted every one, two, or 3 each. Fig. 4b shows the case of the two generators 34 located in a symmetric position are adjusted together, thereby the balance of the rotation resistance of the impeller 12 being obtained.

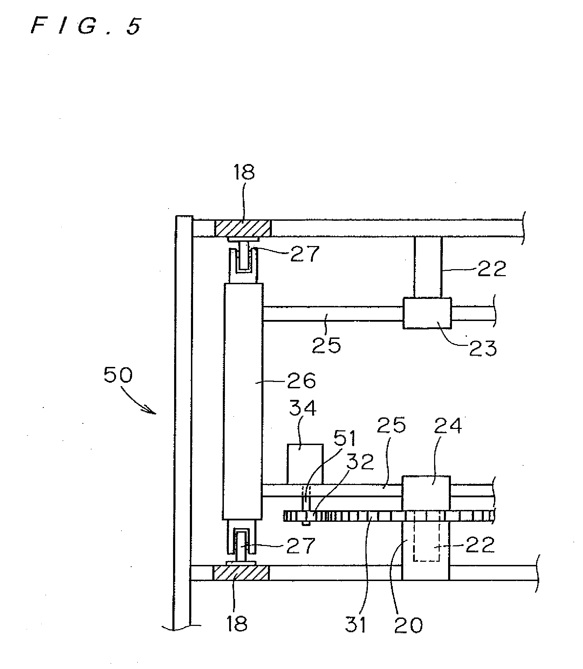

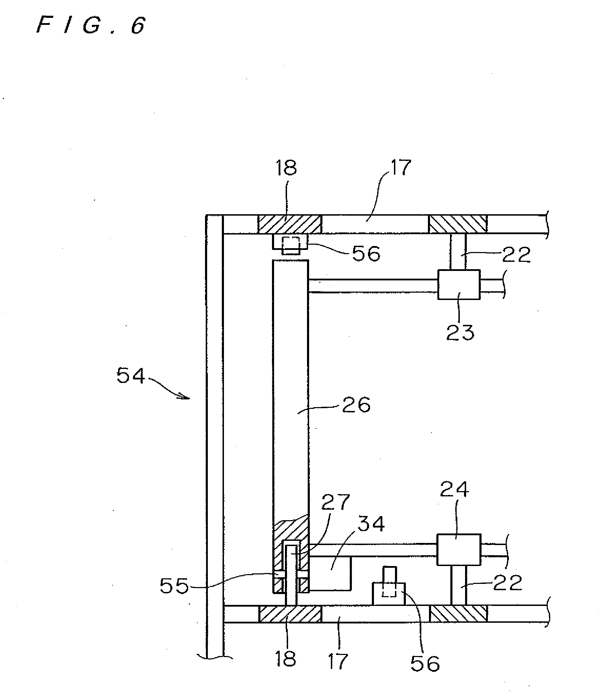

In the above embodiment, the power generator 34 is fixed to the frame 11 side, but it can be provided on the impeller 12 side as shown in Fig.5 and Fig.6. In the wind power generator 50 shown in Fig. 5, the main gear 31 is fixed around the lower bearing 20, the power generator 34 is mounted on the transversal blade 25, and the sub gear 32 meshing with the main gear 31 is fixed to the input shaft 51 of the power generator 34. In this wind power generator 50, the sub gear 32 rotates on its axis while rotating along the orbit, around the periphery, of the main gear 31, when the impeller 12 rotates. Resultantly, the rotation of the impeller 12 is speed-upped and transmitted to the input shaft 51 of the power generator 34 to generate power. Since the power generator 34 is located apart from the shaft 22, the inertia moment of the impeller is large. Accordingly the initial rise of the rotation is slow, but the rotation tends to continue once it starts, effecting a stable power generation.

In the power generator 50 shown in Fig.5 the shaft 22 is omitted between the upper and the lower bosses 23, 24 in order to save the weight. The wheels 27 are rotatably provided also on the upper edges of the longitudinal blades 26, and these wheels 27 are so composed as to rotate along the under side of the upper ring 18, thereby restraining the vertical vibration of the impeller 12 to effect a stable rotation. The other configurations, their actions, and effects including that of making the breaker to be turned on/off automatically are the same as the embodiments shown in Fig.1 to 4.

The wind power generator 54 shown in Fig. 6, the power generator 34 is connected to the shaft 55 of the wheel 27. The power generator 34 is attached to the longitudinal blade 26 or to the transversal blade 25. In this embodiment, when the impeller 12 rotates and the wheels 27 roll on the ring 18, the shafts 55 rotates and the power generators 34 generate electric powers, in which the ring 18 as a run way acts as a it were a main gear. The wheel 27 can be substituted by a sub gear, and a ring-shaped main gear meshing with the sub gear can be provided on the ring 18, in which case the sub gear and the main gear can be bevel gears etc.

In this wind power generator 54, the hydraulic power unit 56 is provided on the ring 18 of the frame 11 or on the spoke 17 as a lock means to restrain the rotation of the impeller 12. The hydraulic power unit 56 comprises, for example, a hydraulic cylinder, a pad or head provided on a cylinder rod, and a guide for the head. It is preferable to provide a pair of the upper and the lower units in an opposed position. The upper hydraulic power unit 56 whose rod extends downward is provided on the upper spoke 17 or the ring 18. The lower hydraulic power unit 56 whose rod extends upward is provided on the lower spoke 17 or the ring 18. Further, the number of the hydraulic power unit 56 is preferable to be provided with respect to each of the longitudinal blades 26 so as to be able to restrain the upper and the lower edge of the three longitudinal blades 26. The other configurations, their actions, and effects are the same as the embodiments shown in Fig.1~4.

In this embodiment, when the wind is very strong as that of typhoons, the longitudinal blades 26 can be stopped at the position corresponding to the hydraulic power unit 56, and the upper and the lower edges of the longitudinal blades 26 can be restrained by being tucked into the hydraulic power unit 56 to lock the impeller 12. Because the longitudinal blades 26 themselves are restrained, the transversal blades 25 are prevented from a large bending force to be applied. In the case of a small windmill, such a lock means as to restrain the rotation between the boss 23, 24 and the bearing 19, 20 can be provided. Further, in place of the hydraulic power unit, an air unit or an electric motor driven lock means can be employed.

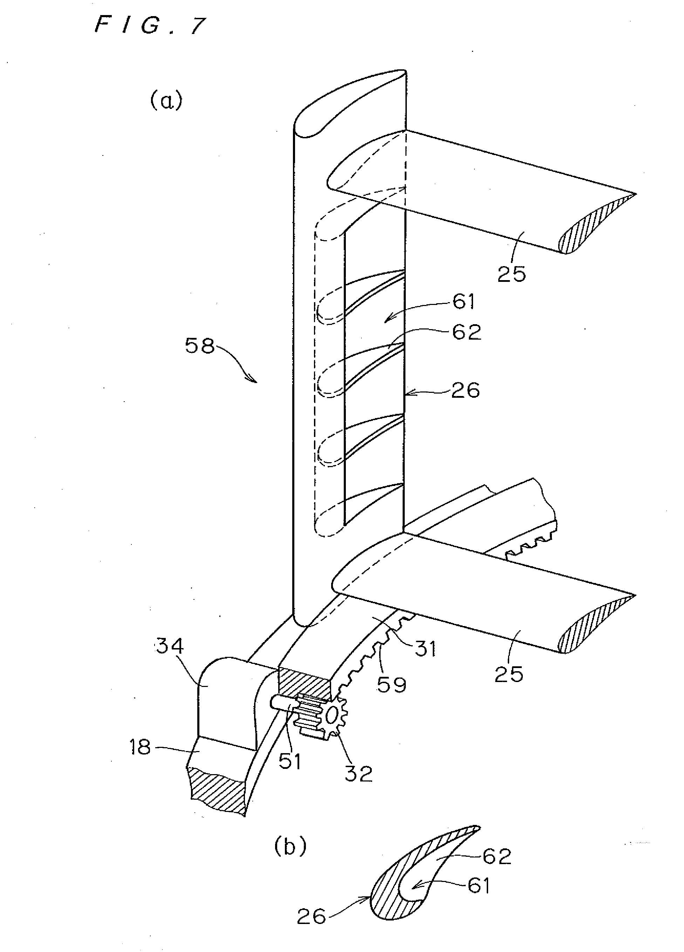

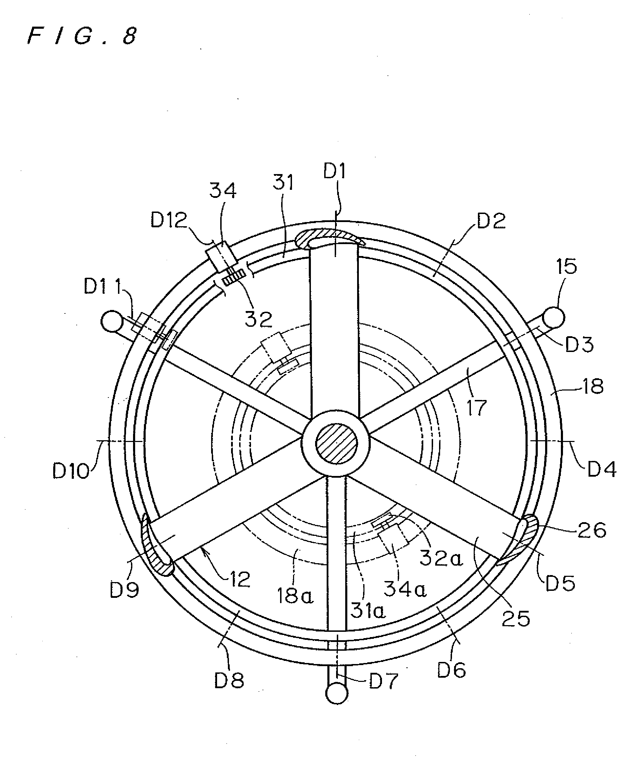

The wind power generator 58 as shown in Fig.7a has the ring-shaped main gear 31 provided with the downward teeth 59 under the transversal blade 25. The power generator 34 is mounted on the ring 18 of the frame 11 or on the spoke 17, and the sub gear 32 meshing with the main gear 31 is fixed to the input shaft 51 of the power generator 34. When the power generator 34 is mounted on the ring 18, the number of the power generators can be comparatively determined at its option. For example as shown in Fig.8 in dashed line D1~12, 12 each or more can be easily mounted. For adaptation to design conditions, or terrain conditions, increase or decrease of the power generators 34 can be done easily. As shown in the dashed line, it is possible to provide a second ring 18a having a small diameter on the inside of the ring 18; a second power generator 34a mounted on the second ring 18a; and a second main gear 31a meshing with sub gear 32a fixed to the input shaft of the power generator 34a mounted on the transversal blade 25 of the impeller 12. The second main gear 31a, the second sub gear 32a, and the second power generator 34a can be employed together with the former main gear 31, the sub gear 32, and the power generator 34.

Furthermore, the main gear 31 can be an internal gear and the input shaft 51 of the power generator 34 can be directed vertically. In whichever case, a cover is preferable to be provided on the main gear 31 and the sub gear 32 to make the wind drag as low as possible. In the case that the cover is provided, a merit of preventing the leakage of meshing noise from the gears is obtained. In the wind power generator 50 in which the main gear 31 is fixed as shown in Fig.5, the main gear can be a ring-shaped gear or an internal gear. In the each embodiment, in the case that the ring gear 31 is large, dividing the gear into some circular arcs allows easy manufacturing and easy attaching to the impeller 12 or the frame 11.

Furthermore, in the wind power generator 58 shown in Fig. 7 and 8, in place of the main gear 31, a ring-shaped rail can be used. And in place of the sub gear 32, a wheel can be used. The rail and the wheel can be the same as those used in railroad vehicles. They can also be a combination of a flat rail and rubber wheels etc. In the case that the shaft of the sub gear is located in a radial direction, the sub gear can share the weight of the impeller reducing the load of the bearings. In the case that in addition to the combination of the main gear and the sub gear the combination of the wheels and the rails or wheels and the flat run way is employed, the weight of the impeller loaded on the sub gear is reduced, thereby a merit of reduced noise being obtained.

In the wind power generator 58 of Fig 7a and Fig. 8, as shown in Fig. 7b, a pocket 61 for receiving winds is provided on the backside of the internal surface of the longitudinal blade 26. The pocket 61 is preferable to be provided in the space between the upper and the lower transversal blades 25 of the longitudinal blade 26. Because the thickness of the longitudinal blade 26 is thin in the part where the pocket 61 is provided, it is preferable to provide a rib 62 for reinforcing. The rib 62 can be inclined to yield a lift force with rotation. Such pockets 61 can receive the wind from backward and let slip the wind from front by their rounded heads, thereby enlarging the torque received by the impeller 12 and allowing efficient power generation.

The impeller 12 provided with the longitudinal blades 26 as shown in Fig.7a, Fig.7b, and Fig.8 and the transversal blades 25 supporting the longitudinal blades 26 can be employed in a wind power generator in which the impeller 12 drives one power generator. In this case, the input shaft of the power generator can be connected to the axis of the impeller 12 directly or indirectly.

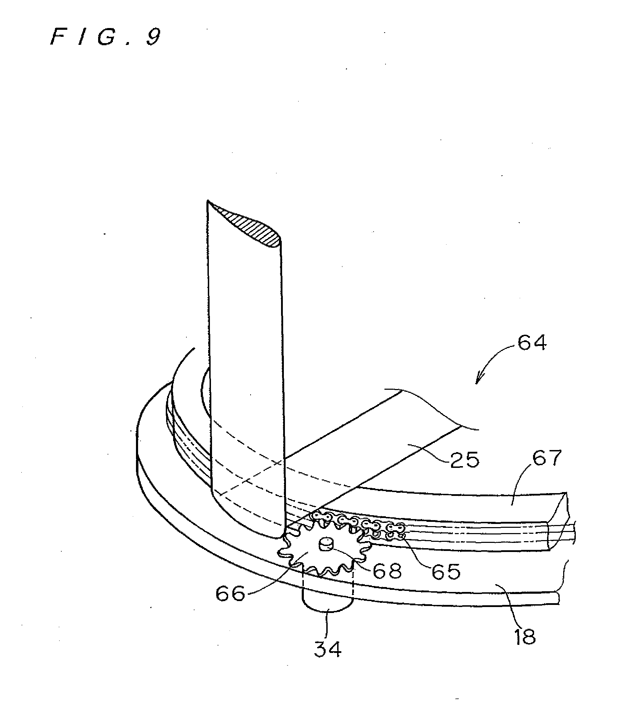

The wind power generator 64 shown in Fig. 9 is a transformed example of the wind power generator 58 having the annular main gear of Fig 7a, in which a chain 65 is employed as the main gear and a sprocket 66 meshing with the chain 65 is employed as the sub gear. The chain 65 is, in this embodiment, is fixed to the periphery of the ring-shaped supporting member 67 provided under the transversal blade 25. The vertical shaft 66 of the sprocket 66 is connected to the power generator 34 mounted on the ring 18 of the frame. As the chain 65, a roller chain with fixing attachments can be used, and the fixing attachments are attached to the periphery of the supporting member 67 circularly to hold the chain 65 wholly.

In this wind power generator 64, the chain 65 acts similarly to the teeth of the main gear, and the meshing sprocket 66 rotates with the rotation of the impeller 12 to generate power in the power generator 34. The chain 65 can be fixed to the inside of the ring-shaped supporting member 67, in which case the chain 65 acts similarly to the teeth of the internal gear. Further, as is the case shown in Fig.7a it can be fixed inflectionally to the underside of the supporting member 65. Needless to add, it can be fixed to the upper side of the supporting member, in which case the rotation axis of the sprocket 66 is placed horizontally (in a radial direction of the impeller) similar to the case in Fig.7a.

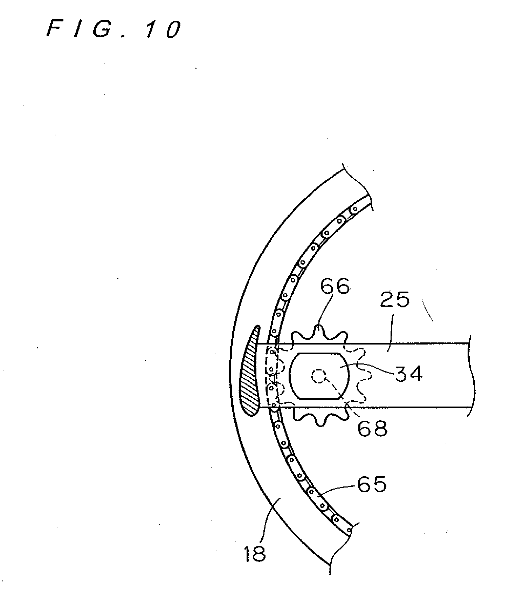

The above structure can be employed in the wind power generator in which the main gear is fixed to the frame etc. and the impeller is provided with the sub gears and the power generator. In this case as shown in Fig.10, the chain 65 is fixed to the inside of the ring 18 of the frame acting as a main gear, and the sprocket 66 is rotatably attached to the transversal blade 25 of the impeller 12 acting as a sub gear. The input shaft of the power generator 34 mounted on the transversal blade 25 is connected to the shaft 68 of the sprocket 66. The chain 65 can be fixed to the other articles, for example, the annular supporting member fixed to the frame. Further, it can be circularly fixed to the periphery, upper side, or underside of the ring and the annular supporting member.

The wind power generator, in which the chain 65 is used in place of the main gear and the sprocket is used in place of the sub gear, is easy to manufacture compared with the case of manufacturing a large gear. Further, the machining accuracy and the rigidity can be loosened to some extent and the weight can be reduced.

The wind power generators 10, 50, 54, 58 composed as above are, for example, located along coastlines or located on slightly higher places such as mountains or plateaus so as to receive a large amount of wind, same as conventional windmills for the wind power generation. When a wind blows, the longitudinal blades 26 receive the wind to rotate the impellers 12 in counter clockwise as shown in Fig.8. Since the transversal blades 25 yield a lift force in the wind, the load of the lower bearing 20 supporting the weight of the impeller 12 becomes lower to decrease the rotational resistance, and the impeller 12 rotates efficiently in a weak wind. By the rotation of the impeller 12, the some operating power generators 21 generate electric power, and this power is transmitted through the transmission line 36, 37 to consuming regions or to the batteries for storage. In the case that the distribution areas of the power are far away and the power generator is an alternating current generator, the voltage is changed by an electrical transformer before the power transmission. In the case of a direct current generator, the power is converted into alternative currents before the power transmission

In the above embodiment, the upper edge and the lower edge of the shaft 22 are rotatably supported by the bearings 19, 20, but a shaft can be provided in the bearing 19, 20 side to support rotatably the upper and the lower bosses 23, 24. Further, in the above embodiment, the longitudinal blades 26 of the impeller 12 and the bosses 23, 24 are connected using the transversal blade 25, but a supporting member such as a simple rod can be used, in which case no lift force is yielded by the transversal blade.

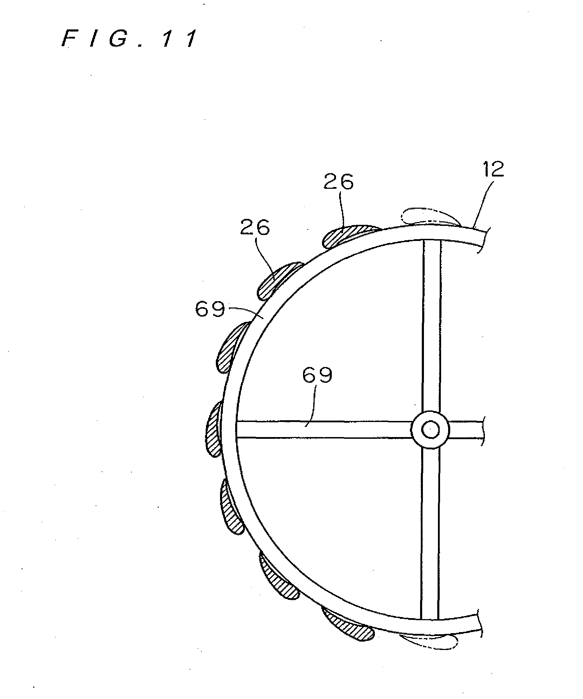

Furthermore, in the above embodiment, the longitudinal blade 26 is fixed to the transversal blade or to the supporting member extending in a radial direction, but it can be fixed to the upper and the lower ring-shaped supporting member 69 provided on the transversal blade or the radial supporting member 68 as shown in Fig. 11. In this case, the longitudinal blades 26 can be provided more than the number of the transversal blades or the radial supporting members, thereby the intervals of the longitudinal blades 26 can be selected freely benefiting for many provision of the longitudinal blades.

In the above embodiment, the rotation of the shaft 22 is detected by the rotation sensor 41 and is fed backed to the controller 40, but a different windmill or propeller for measuring the wind speed and a sensor for detecting its rotational speed can be employed separately. A sensor for detecting the wind pressure directly can be employed also.

In the wind power generator in Fig 3 and Fig. 5, the ring 18 is provided on the frame 11 and the wheels 27 are provided on the impeller 12, but plural wheels can be provided on the frame 11 and a ring contacting these wheels can be provided on the impeller 12. This embodiment is equivalent to that shown in Fig. 7a, in which the sub gear is substituted with the wheel and the main gear is substituted with the ring. In this embodiment, the wheels can support a part or whole of the weight of the impeller, and the wheel rotates with the rotation of the impeller. Further, in this embodiment, same as that shown in Fig.7a, the power generator can be connected to the each shaft of the wheel enabling operation of plural power generators at a time.

In such wind power generator as above, the power generator rotated by the impeller can be provided with a coil either on the shaft or on the case, and be provided with a magnet on the other side. However either coil or magnet can be attached to a ring-shaped member and the other can be attached to another ring-shaped member oppositely provided on the frame side. For example, a coil or a magnet can be attached to a similar member as the main gear 31 shown in Fig.7a and the other can be attached to the ring 18 provided on the frame 11. This embodiment operates as a linier generator similar to a linier motor.

In the above case, plural coils can be provided, and same as shown in Fig.1, some of the coils can be operated with the operation of the remaining coils being stopped, thereby enabling the smooth adjustment of power generation according to the wind power. The above ring-shaped member provided with a coil and the ring-shaped members provided with a magnet can be combined into one set, and plural sets of them can be provided one above the other. And they can be wired respectively as the one power generator similar to Fig.1

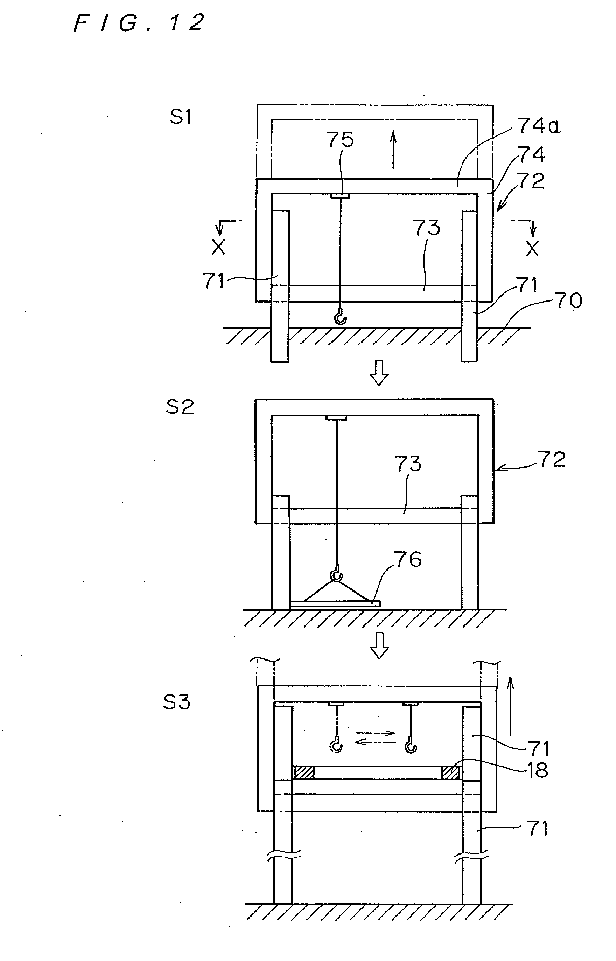

Referring to Fig.12 to 14, an embodiment of the construction method of this invention is described below. In this embodiment, the wind power generator 10 shown in Fig. 2 is described as an example. However, the construction method of this invention can apply not only to the wind power generator but also to steel towers, viewing platforms, buildings, or other structures, and particularly to high-rise structures with advantageous effects.

As the first setout, the lowest stage leg members 71 with three legs (Reference numeral 15 of Fig.2) are stuck up on the basement 70.
The climbing crane 72 is attached using those leg members as supports (the first process S1). In this condition, since it is still in a low position, facilities such as crane vehicles etc. on the ground can be used. This embodiment comprises ring-shaped scaffolds 73 surrounding the leg members 71 (refer to Fig.12), a gantry frame 74 provided on the scaffold 73, and traveling carriage 75 traveling on a beam 74a of the frame. The beam 74a is preferable to be ring-shaped same as the scaffold 73, and it can be also a crane of other types (refer to Fig.12).

Next, the crane 72 is lifted up along the leg members 71, and the scaffold 73 is placed near the upper edge of the leg member 71. Since the scaffold 73 is surrounding the three leg members 71 closely as shown in Fig.12, the crane 72 is stabilized and can be lifted up with low risk of dropping off. Then, the next stage leg members 71 or materials 76 of the ring (refer to reference numeral 18 of Fig.2) are climbed, and assembled (the second process S2), using the scaffold 73 and the crane 72.

After the leg members 71 of the second stage are assembled, the crane 72 is lifted up again (the third process S3). Thereafter, the above first process S1 to the third process S3 are repeated in sequence. When the height of the leg members 71 reaches a given height, the ring 18 is assembled. In this case, the ring-shaped scaffold 73 serves as a temporary platform for assembling the ring 18. After the ring 18 is assembled, the impeller 12(reference numeral 12 of Fig.2) and the power generator room (reference numeral 21 of Fig. 21) are mounted. Next, the work to further extend the leg members 71 upward is carried out. And then, the second ring 18 is mounted, and the upper stage impeller and the power generator room are mounted. The work is completed by mounting the upper edge ring 18. The crane 72 is brought down to the ground using its climbing function, after the completion of the work. In the case of the gantry crane 72 as shown in Fig. 10, the beam 74a is removed and then brought down. In the case of the jib crane as shown in Fig. 12, it can be brought down directly. But in whichever case, it can also be brought down using a small crane after disassembled.

In the case that the leg members 71, the ring 19 or the outside structure such as the external wall etc. are assembled first and the inside structure such as the impeller and the power generator room etc. are mounted later, the outside structure can be assembled while the crane 72 is ascending, and the inside structure can be assembled sequentially while the crane 72 is descending. Further, the inside structure can be assembled in the every step while it is ascending after the crane is once descended to the lower end. Because the impeller and the power generator room are relatively large structure, they are usually assembled using the crane 72 after lifting up every part of the structure to the required height. However, the structure can be assembled previously on the ground, and the assembled structure can be lifted up to the required height by the crane and mounted. In this case, cooperative lifting up by the plural cranes is preferable.

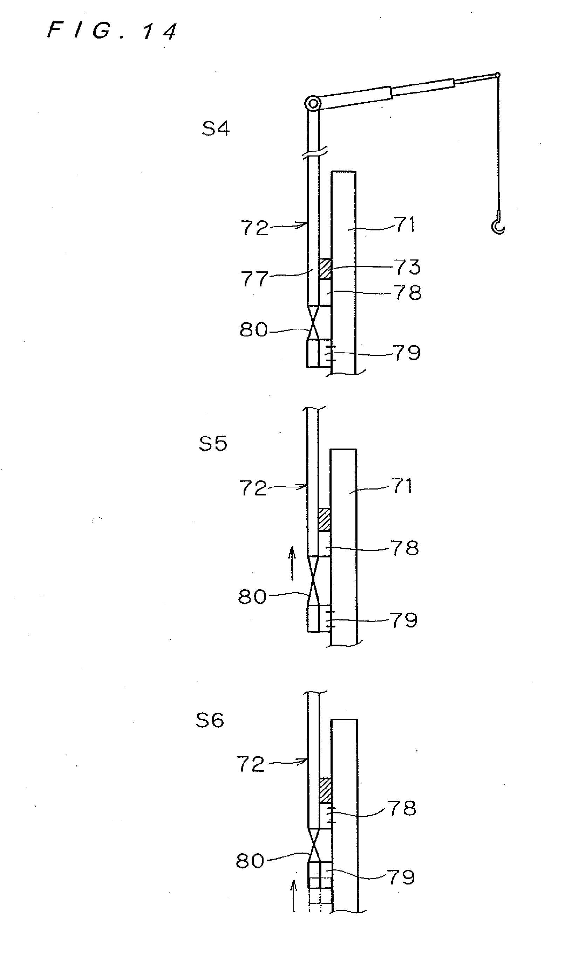

Fig.12 shows the ascending and descending actions of the above crane, and a jib crane is shown in Fig.14, but it can be applied to any type of cranes. In the lower part of columns 77 of the crane 72, the first fixing bracket 78 and the second fixing bracket 79 are provided which can be fastened/unfastened to the leg members 71 besides the above ring-shaped scaffold 73. These fixing bracket 78, 79 are attached to the inside of the column 77. In between the corresponding part to the first fixing bracket 78 and the second fixing bracket 79, the retractable climbing unit (a large stroke jack) 80 stands. The retractable climbing unit 80 is preferable to be a hydraulic machine, but it can be also other types such as screw-operated types etc. The fastening/unfastening operation of the fixing bracket 78, 79 can be done with screw cramp or pin cramp to the leg member 71. Further, a lock mechanism using hydraulic pressure can be employed.

In the crane 72 composed as above, the upper first fixing bracket 78 is unfastened or released (the fourth process S4) at the beginning. In this case, because the ring-shaped scaffold 73 is provided, the part upper than the retractable climbing unit is supported stably by the leg members 71. The first fixing bracket 78 can be a slide attachment to allow sliding up and down, and to avoid departing from the leg members 71.

And then, the retractable climbing unit 80 is extended to lift the crane 72 upward (the fifth process S5). In this condition, the first fixing bracket 78 is fixed to the leg members 71, and the second fixing bracket 79 is unfastened. Next, the retractable climbing unit is retracted to lift up the second fixing bracket 79(the sixth process 6),thereby the crane 72 being lifted up by just much as the stroke of the retractable climbing unit 80.By the repetition of the above fourth to sixth process S4~S6, the crane 72 is lifted up along the leg members 71. When descending the crane 72, the reverse process of the above is carried out.

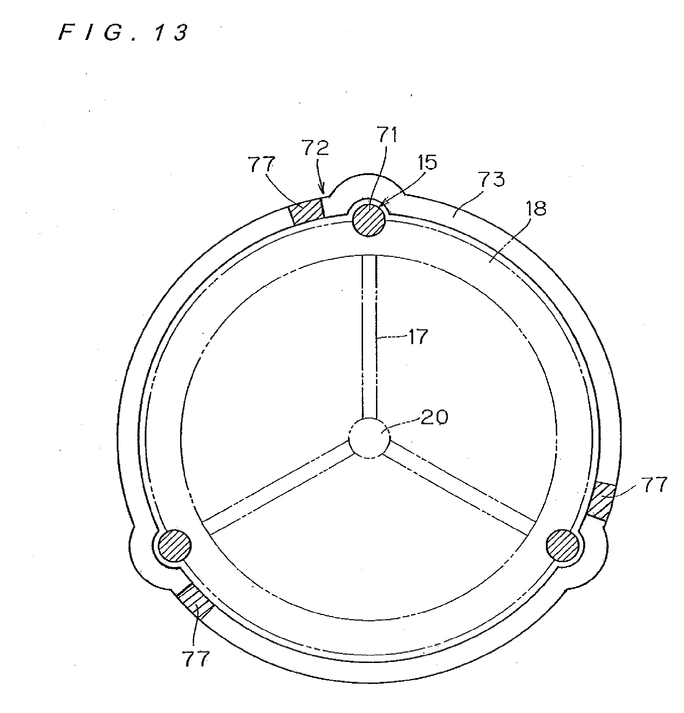

Both in the case of the jib crane shown in Fig.14 and the gantry crane in Fig.12, the location of the column 77 near the leg member 71 makes it difficult to set the next leg member 71. Therefore, as shown in Fig. 13, it is preferable to set the column 77 a little apart from the leg member 71 in the lateral direction.

In the above construction method, since the crane 72 can ascend and descend by itself, the upper structures can be sequentially assembled using the once assembled structure as a scaffold, thereby the construction of high-rise buildings can be performed efficiently.

The above construction method is applicable not only to wind power generators but also to structures, for example buildings, provided with plural columns or cylindrical external wall which can support a crane and can guide the ascending and descending of the crane. In the case that strength of the external wall is weak, the crane is ascended and descended using the inside framework of the wall and the external wall of the corresponding part is attached in the final process. The above construction method is well applicable to the structures whose upper part dimensions and the lower part dimensions are the same and have vertical legs, but it is also applicable to the structures whose dimensions become gradually thin in proportion as to going upward. In this case, it is preferable to make the dimensions of the scaffolds surrounding the structures retractable.

## Claims

1. A wind power generator, comprising;
a flame, an impeller supported rotatably by the flame, plural generators driven to rotate by the impeller, transmission wires leading from generators, and a controller selecting some transmission wires to connect or disconnect them.

2. A wind power generator according to claim 1, comprising;
a discoid or annular main gear which rotates with the rotation of the impeller, and plural sub gears meshing with the main gear,
wherein each shaft of the sub gear is connected to the generator fixed on the frame.

3. A wind power generator according to claim 2,
wherein the impeller rotates around a vertically extending axis and the main gear is fixed to the impeller.

4. A wind power generator according to claim 1,
wherein the impeller rotates around a vertically extending axis; an annular run way or a main gear adjacent to the impeller is fixed to the frame; plural wheels or sub gears rolling along the annular run way or the main gear are attached rotatably to the impeller; and the generators are connected to a shaft of the wheels or sub gears.

5. A wind power generator according to claim 1,
wherein an annular rail is fixed to the impeller; wheels contacting with the annular rail is attached rotatably to the frame; and the wheels are connected to a shaft of the generators.

6. A wind power generator according to claim 4 or 5,
wherein wheels or sub gears support the weight of the impeller.

7. A wind power generator according to claim 2, 3 or 4,
wherein the annular main gear is composed of a chain mounted on an annular member and the sub gear is composed of a sprocket meshing with the chain.

8. A wind power generator according to claim 1,
wherein the controller has a means to detect a wind speed or a rotation speed and a means to decrease the number of the generators which disconnect the transmission wires when the rotation speed decreases.

9. A wind power generator according to claim 1,
wherein the impeller rotates around a vertically extending axis; the impeller is composed of longitudinal blades located circumferentially at predetermined interval; and each longitudinal blade has a pocket in its back to receive winds.

10. A wind power generator, comprising;
a flame, an impeller supported rotatably by the flame, and generators driven to rotate by the rotation of the impeller,
wherein the impeller rotates around a vertically extending axis; the impeller is composed of longitudinal blades located circumferentially at predetermined interval; and the longitudinal blades have a pocket in their backsides to receive winds.

11. A process to construct a structure composed of plural stages, comprising the steps of; fixing of a first stage members on a basement; fixing a climbing crane, which climbs by itself, composed of legs and the construction scaffold surrounding the legs on the first stage members; lifting the climbing crane using the first stage member as a support; connecting the second stage member to the first stage member using the crane; and lifting the climbing crane using the second stage member as a support.

12. A process to construct a structure composed of plural stages according to claim 11,
wherein the climbing crane comprises a first fixing bracket which can fasten or unfasten the each stage member, a retractable lifting unit connected on the first fixing bracket, and a second fixing bracket which can fasten or unfasten the each stage member; and
wherein the climbing crane is lifted by extending the retractable lifting unit in the condition that the first fixing bracket is fastened and the second fixing bracket is unfastened; and retracting the retractable lifting unit in the condition that the second fixing unit is fastened and the first fixing bracket is unfastened.
